# EUROPEAN PATENT APPLICATION

(11) **EP 4 429 325 A1**
(43) Date of publication of application: **11.09.2024**
(21) Application number: 24151260.7
(22) Date of filing: 10.01.2024
(51) Int. Cl.: H04W 36/00, H04W 74/0833, H04W 36/08, H04W 56/00

(54) **METHOD FOR IMPLEMENTING CELL SWITCH PROCEDURE AND USER EQUIPMENT**

(30) Priority: 08.03.2023 US 202363450675 P; 28.12.2023 US 202318398154
(71) Applicant: Acer Incorporated, New Taipei City 221 (TW)
(72) Inventor: LIN, Jung-Mao, Taipei City 221, Taiwan (TW)
(74) Representative: Haseltine Lake Kempner LLP

(57) **Abstract**

The embodiments of the disclosure provide a method for implementing a cell switch procedure and a user equipment, UE (410). The method includes: receiving (S510) a cell switch configuration for the cell switch procedure from a source cell (420), wherein the cell switch configuration comprises an early-uplink synchronization, EUS, configuration for an EUS procedure; performing (S520) the EUS procedure based on the EUS configuration to obtain a timing advance, TA, value associated with a target cell (430) and a cell switch command from the source cell (420); in response to receiving the cell switch command, performing (S530) the cell switch procedure to the target cell (430) based on the TA value; and transmitting (S540) a cell switch complete information to the target cell (430) after completing the cell switch procedure.

## Description

### BACKGROUND

### 1. Field of the Invention

The present disclosure generally relates to a communication mechanism, in particular, to a method for implementing a cell switch procedure and user equipment (UE).

### 2. Description of Related Art

In the new radio (NR) standard, the protocol stack can be understood as an L1/L2/L3 structure, wherein L1 includes the physical (PHY) layer; L2 includes the medium access control (MAC) layer, the radio link control (RLC) layer, and packet data convergence protocol (PDCP) layer; and L3 includes the radio resource control (RRC) layer.

Currently, the serving cell change procedure is triggered by L3 measurements and is done by L3 signalling triggered mobility. However, the current service cell change procedure involves complete L2 (and L1) resets, which may lead to larger overhead and longer interruption time.

Therefore, for improving the efficiency of the serving cell change procedure, a mechanism called "L1/L2-triggered mobility" has been proposed for mobility latency reduction.

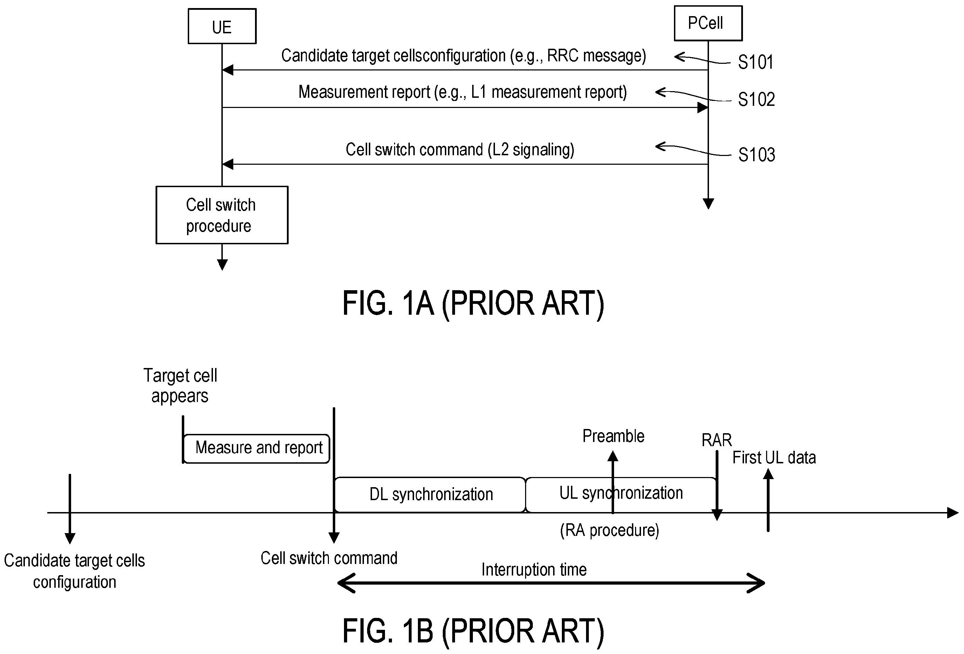

See FIG. 1A and FIG. 1B, wherein FIG. 1A shows a flow of the serving cell change procedure based on the L1/L2-triggered mobility, and FIG. 1B shows the timing diagram associated with FIG. 1A.

In step S101, the UE receives Candidate target cells configuration (e.g., an RRC message) from the primary cell (PCell), and the UE can measure the signal quality of the candidate target cells. In step S102, the UE provides a measurement report (e.g., an L1 measurement report) to the PCell, wherein the measurement report may include the measured signal quality of the candidate target cells.

In this case, the PCell may determine, based on the received measurement report, whether there is a suitable target cell for serving the UE. If yes, the PCell may send a cell switch command (e.g., an L2 signaling (e.g., an MAC control element (CE))) to the UE in step S103 to request the UE to switch to the target cell.

FIG. 1B, in response to the cell switch command (which indicates the target cell), the UE needs to perform the downlink (DL) synchronization and the uplink (UL) synchronization, wherein the UL synchronization involves sending a random access preamble in a random access (RA) procedure to the target cell. In response to the random access preamble from the UE, the target cell would provide a random access response (RAR) to the UE, wherein the RAR may carry a timing advance (TA) value, such that the UE can accordingly send its UL data to the target cell.

As can be seen from FIG. 1B, the duration from the UE receiving the cell switch command to the UE sending the first UL data is called an interruption time, which is the duration needed by the UE to finish the handover procedure to the target cell.

For shorten the interruption time, the concept of early RA has been proposed, which is implemented by controlling the UE to perform RA before receiving the cell switch command.

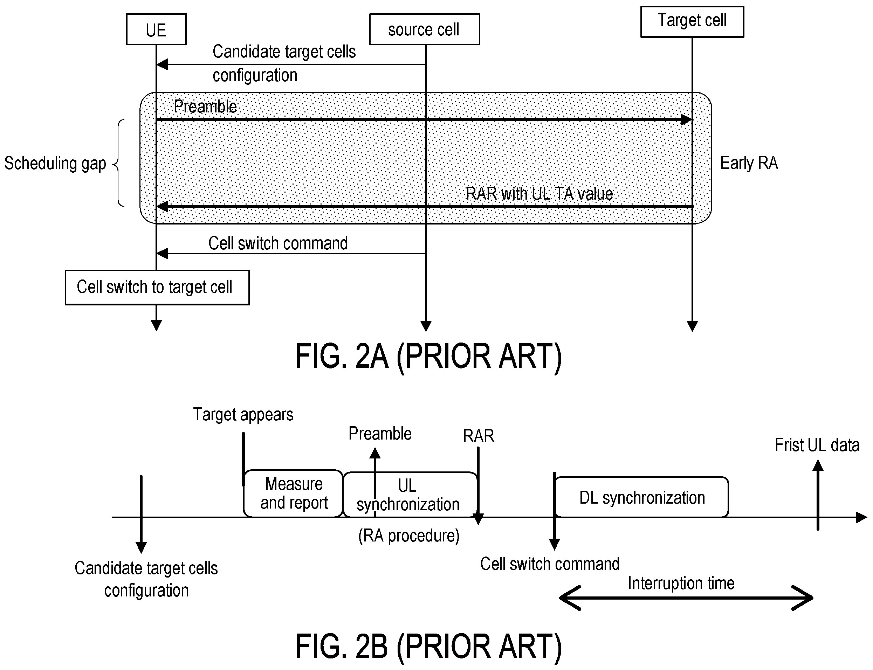

See FIG. 2A and FIG. 2B, wherein FIG. 2A shows a flow of the serving cell change procedure based on early RA, and FIG. 2B shows the timing diagram of the early RA. As can be seen from FIG. 2A and FIG. 2B, although the interruption time of the early RA is shorter in comparison with the interruption time in FIG. 1B, a scheduling gap would also be introduced, wherein the scheduling gap is a duration where the serving cell cannot schedule the UE.

Therefore, for people having ordinary skills in the art, it would be beneficial to design a mechanism for shortening the scheduling gap while applying the early RA.

### SUMMARY OF THE INVENTION

Accordingly, the disclosure is directed to a method for implementing a cell switch procedure and UE, which may be used to solve the above technical problems.

The embodiments of the disclosure provide a method for implementing a cell switch procedure, applied to a user equipment (UE), including: receiving, by the UE, a cell switch configuration for the cell switch procedure from a source cell, wherein the cell switch configuration comprises an early-uplink synchronization (EUS) configuration for an EUS procedure; performing, by the UE, the EUS procedure based on the EUS configuration to obtain a timing advance (TA) value associated with a target cell and a cell switch command from the source cell; in response to receiving the cell switch command, performing, by the UE, the cell switch procedure to the target cell based on the TA value; and transmitting, by the UE, a cell switch complete information to the target cell after completing the cell switch procedure.

The embodiments of the disclosure provide user equipment (UE), including a transceiver and a processor. The processor is coupled to the transceiver and performs: controlling the transceiver to receive a cell switch configuration for a cell switch procedure from a source cell, wherein the cell switch configuration comprises an early-uplink synchronization (EUS) configuration for an EUS procedure; performing the EUS procedure based on the EUS configuration to obtain a timing advance (TA) value associated with a target cell and a cell switch command from the source cell; in response to receiving the cell switch command, performing the cell switch procedure to the target cell based on the TA value; and controlling the transceiver to transmit a cell switch complete information to the target cell after completing the cell switch procedure.

The embodiments of the disclosure provide a method for implementing a cell switch procedure, applied to a source cell, including: sending, by the source cell, a cell switch configuration for the cell switch procedure to a user equipment (UE), wherein the cell switch configuration comprises an early-uplink synchronization (EUS) configuration for the UE to perform an EUS procedure; and in response to determining that a target cell has provided a timing advance (TA) value during the EUS procedure, sending, by the source cell, a cell switch command to the UE, wherein the cell switch command controls the UE to perform the cell switch procedure to the target cell based on the TA value provided by the target cell in the EUS procedure.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the disclosure.
FIG. 1A shows a flow of the serving cell change procedure based on the L1/L2-triggered mobility.
FIG. 1B shows the timing diagram associated with FIG. 1A.
FIG. 2A shows a flow of the serving cell change procedure based on early RA.
FIG. 2B shows the timing diagram of the early RA.
FIG. 3 shows a functional block diagram of communication device according to an embodiment of the disclosure.
FIG. 4 shows a schematic diagram of the EUS procedure according to an embodiment of the disclosure.
FIG. 5 shows a flow chart of the method for implementing a cell switch procedure according to an embodiment of the disclosure.
FIG. 6A shows a flow of the method for implementing the cell switch procedure according to an embodiment of the disclosure.
FIG. 6B shows a flow of the method for implementing the cell switch procedure according to FIG. 6A.
FIG. 7A to FIG. 7C show different scenario of applying the EUS failure (EUSF) timer by the source cell according to embodiments of the disclosure.
FIG. 8A to FIG. 8C show different scenario of applying the EUSF timer by the UE according to embodiments of the disclosure.
FIG. 9 shows a flow chart of the method for implementing a cell switch procedure according to an embodiment of the disclosure.
FIG. 10 shows a scenario of applying an EUS timer according to an embodiment of the disclosure.
FIG. 11 shows a flow chart of verifying the TA value before performing the cell switch procedure according to an embodiment of the disclosure.
FIG. 12 shows a flow chart of the method for implementing a cell switch procedure according to an embodiment of the disclosure.
FIG. 13 shows a flow chart of verifying the TA value before performing the cell switch procedure according to an embodiment of the disclosure.
FIG. 14 shows a flow chart of the method for implementing a cell switch procedure according to an embodiment of the disclosure.
FIG. 15 shows a flow chart of the method for implementing a cell switch procedure according to an embodiment of the disclosure.
FIG. 16 shows a flow chart of the method for implementing a cell switch procedure according to an embodiment of the disclosure.
FIG. 17A shows a scenario where the information of CTCG is implicitly indicated according to an embodiment of the disclosure.
FIG. 17B shows a scenario where the information of CTCG is explicitly indicated according to an embodiment of the disclosure.
FIG. 18 shows a flow chart of the method for implementing a cell switch procedure according to an embodiment of the disclosure.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

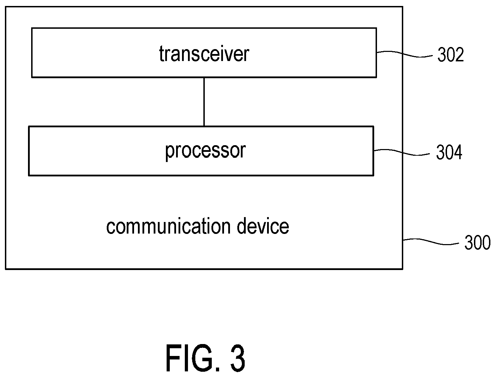

See FIG. 3, which shows a functional block diagram of communication device according to an embodiment of the disclosure.
In FIG. 3, the communication device 300 includes a transceiver 302 and a processor 304. The transceiver 302 may be configured for transmitting and receiving signals from other devices within a coverage area thereof. The transceiver 302 is capable of performing analog to digital signal conversion (ADC), digital to analog signal conversion (DAC), modulation, demodulation, signal amplification, low-pass filtering, and bandpass filtering. For example, the transceiver 302 is configured to provide information on a received signal to the processor 304, modulating data received from the processor 304 into a modulated signal, and transmitting the modulated signal to other devices.

In some embodiments, the communication device 300 may further include other elements, such as an antenna module for implementing the aforementioned functions of the transceiver 302 and the processor 304.

The processor 304 may be coupled with the transceiver 302, and the processor 304 may be, for example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like.

In the embodiments of the disclosure, the communication device 300 can be used to implement devices such as UE and/or communication nodes. In some embodiments, the communication nodes in the disclosure may include the source cell, target cell, etc., and the meanings of each communication node can be referred to the specification of the associated communication standards (e.g., 3GPP Rel-17/Rel-18) but the disclosure is not limited thereto.

In the embodiments of the disclosure, a mechanism named "early UL synchronization (EUS)" procedure is proposed to implement the early RA concept, e.g., acquiring, by the UE, the TA value of the target cell before receiving the cell switch command from the serving cell.

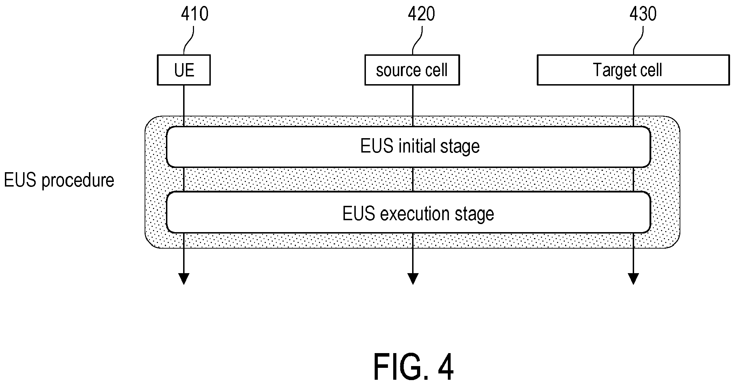

See FIG. 4, which shows a schematic diagram of the EUS procedure according to an embodiment of the disclosure. In FIG. 4, the EUS procedure performed by at least one of the UE 410, the source cell 420, and the target cell 430 may exemplarily include two stages: (1) an EUS initial stage; (2) an EUS execution stage.

In one embodiment, the source cell 420 may be the PCell or Primary Secondary cell (PSCell) serving the UE 410, and the target cell 430 may be the candidate cell determined to be suitable for the UE 410 to handover to, but the disclosure is not limited thereto.

In one embodiment, the EUS procedure can be applied in intra-frequency and inter-frequency cell switch cases.

In one embodiment, the EUS initial stage can be used to configure the EUS procedure for the UE 410 by the source cell 420 (e.g., PCell or PSCell). In one embodiment, in the EUS initial stage, the UE 410 may be configured with at least one candidate target cell (CTC) configuration (CTCC) by the CTCC message from the source cell 420.

In one embodiment, the CTCC may at least include one of the following information for each CTC: (1) the MAC, RLC, PHY configuration of each CTC; (2) the EUS configuration of each CTC or CTC group (CTCG). In the embodiment, the EUS configuration may include at least one of the following types of information: (1) EUS resource configuration; (2) EUS procedure configuration.

The EUS resource configuration may include at least one of the types of information: the RACH resource configuration, or sounding reference signal (SRS) resource configuration. The EUS procedure configuration may include at least one of the types of information: enable EUS configuration, TA validity timer, EUS failure (EUSF) timer, EUS timer, or EUS failure handling configuration, but the disclosure is not limited thereto.

In one embodiment, the UE 410 can acquire the TA value associated with the target cell 430 in the EUS execution stage.

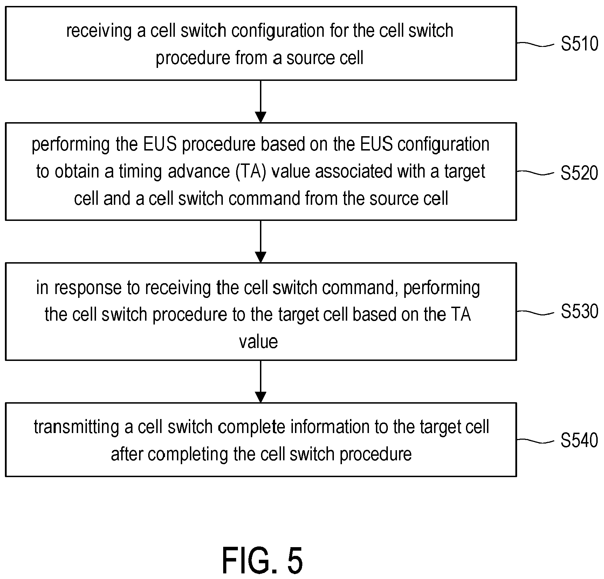

See FIG. 5, which shows a flow chart of the method for implementing a cell switch procedure according to an embodiment of the disclosure.

In step S510, the UE 410 receives a cell switch configuration for the cell switch procedure from a source cell. In step S520, the UE 410 performs the EUS procedure based on the EUS configuration to obtain a timing advance (TA) value associated with a target cell and a cell switch command from the source cell 420. In step S530, in response to receiving the cell switch command, the UE 410 performs the cell switch procedure to the target cell 430 based on the TA value. In step S540, the UE 410 transmit a cell switch complete information to the target cell 430 after completing the cell switch procedure.

In various embodiments, the EUS procedure in step S520 can be implemented in different ways, and the associated details would be discussed in the following.

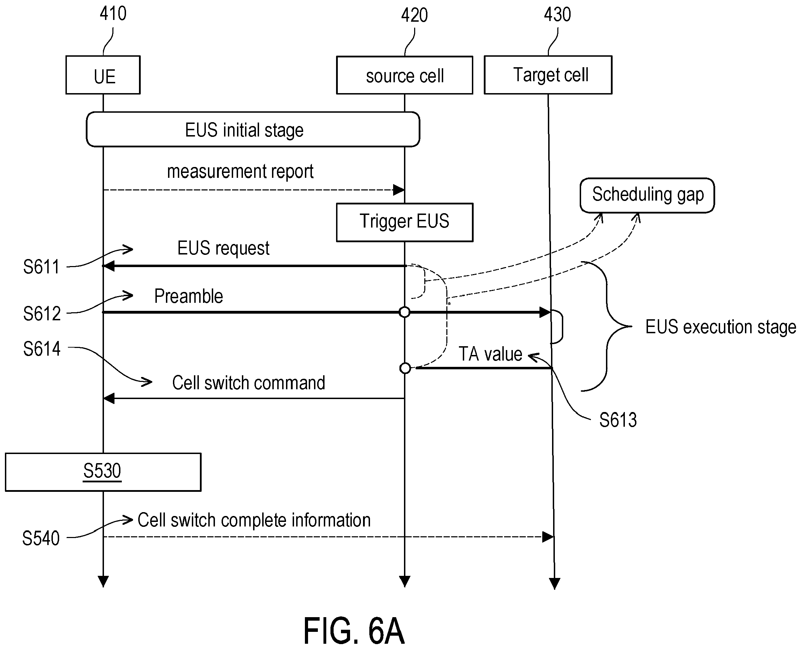

See FIG. 6A, which shows a flow of the method for implementing the cell switch procedure according to an embodiment of the disclosure.

In FIG. 6A, the UE 410 may receive the cell switch configuration in step S510 from the source cell 420 in the EUS initial stage. In this case, cell switch configuration may be carried in the CTCC message from the source cell 420, but the disclosure is not limited thereto.

After obtaining the CTCC from the CTCC message, the UE 410 may perform the associated measurement and accordingly provide the measurement report to the source cell 420.

In one embodiment, the source cell 420 may determine whether there is a suitable target cell for the UE 410 to perform the cell switch procedure based on the measurement report. If yes, the source cell 420 may determine to trigger the EUS execution stage of the EUS procedure.

In the embodiment, the source cell 420 may send an EUS request to the UE 410 in step S611, wherein the EUS request comprises a candidate configuration index associated with the target cell 430.

In one embodiment, the EUS request may be used to trigger the UE 410 to perform the EUS procedure to an indicated target cell. The EUS request may at least include the ID information of the target cell 430 which is also the target of EUS procedure. The EUS request could also include the UL resource (e.g., an UL grant) for sending the cell switch complete information. The EUS request message could be a modified physical DL control channel (PDCCH) order, a new MAC CE, or a new defined RRC message, but the disclosure is not limited thereto.

In the embodiment where the modified PDCCH order is used to implement the EUS request, the DL control information (DCI) format 1_0 with cyclic redundancy check (CRC) scrambled by cell radio network temporary identifier (C-RNTI) may be used for the EUS request. The modified PDCCH order used for EUS request may carry the candidate target cell information which is the target of the EUS procedure.

In the embodiment where the new MAC CE is used to implement the EUS request, a new logical channel ID (LCID) may be reserved for EUS request MAC CE. The new MAC CE used for EUS request may carry the candidate target cell information which is the target of the EUS procedure, but the disclosure is not limited thereto.

After receiving the EUS request from the source cell 420 in step S611, the UE 410 may send a preamble (e.g., an RA preamble and/or SRS) to the target cell 430 according to a resource configured for sending the preamble in step S612.

After sending the preamble, the UE 410 may switch back to the source cell 420. That is, the UE 410 may not need to wait from the TA value from the target cell 430 after sending the preamble.

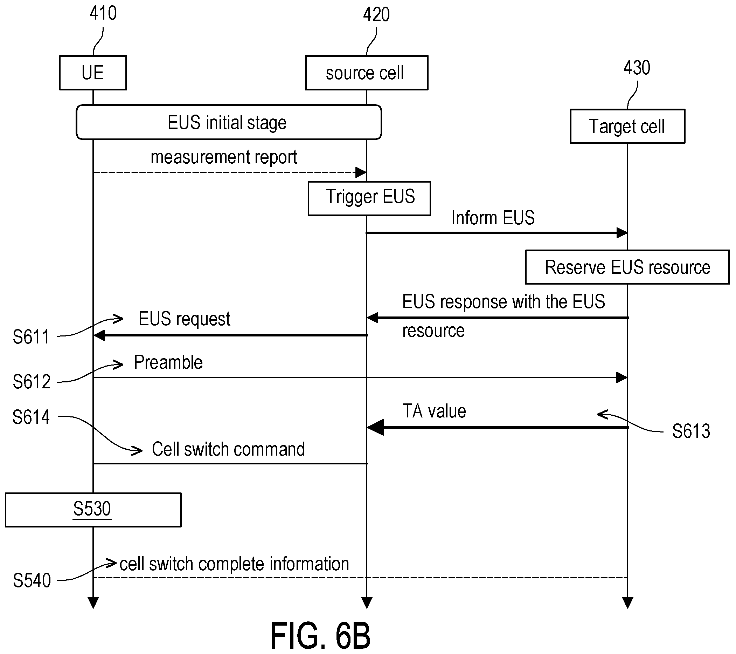

In the embodiment, the resource configured for sending the preamble may be included in the EUS configuration of the CTCC message, but the disclosure is not limited thereto. In another embodiment, the resource configured for sending the preamble may be included in the EUS request, which would be discussed in FIG. 6B.

In FIG. 6A, the target cell 430 may determine the TA value associated with the target cell 430 based on the preamble and provide the TA value to the source cell 420 in step S613.

In one embodiment, if the source cell 420 doesn't have CTC EUS resource configuration (e.g., the resource configured for sending the preamble), the scheduling gap will end after receiving TA value from target cell in step S613. In another embodiment, if the source cell 420 has CTC EUS resource configuration, the scheduling gap will end after UE sending the preamble to the target cell 430 in step S612. These two aspects of scheduling gaps can be observed in FIG. 6A.

After obtaining the TA value from the target cell 430 in step S613, in step S614, the source cell 420 may send the cell switch command (which may carry the TA value associated with the target cell 430) and obtain the TA value associated with the target cell 430 from the cell switch command.

With the TA value associated with the target cell 430, the UE 410 can accordingly perform step S530. More specifically, the UE 410 can perform step S530 without performing TA acquisition. Afterwards, the UE 410 may perform step S540.

In one embodiment, the UE 410 may obtain an uplink grant from the cell switch configuration or the cell switch command, and transmit the cell switch complete information to the target cell 430 after completing the cell switch procedure based on the uplink grant, but the disclosure is not limited thereto.

Specifically, when the UE 410 performs step S530 without performing TA acquisition, the target cell 430 may not be able to know when the UE 410 finishes the cell switch procedure. Therefore, the UE 410 can send the cell switch complete information to the target cell 430 to inform the target cell 430 that the UE 410 has finished the cell switch procedure, but the disclosure is not limited thereto.

See FIG. 6B, which shows a flow of the method for implementing the cell switch procedure according to FIG. 6A. Different from FIG. 6A, when the source cell 420 in FIG. 6B determines to trigger the EUS execution stage of the EUS procedure, the source cell 420 may inform the target cell 430 that the EUS execution stage of the EUS procedure has been initiated. In this case, the target cell 430 may reserve an EUS resource as the resource configured for sending the preamble and provide an EUS response to the source cell 420, wherein the EUS response may carry the EUS resource.

Next, the source cell 420 may use the EUS request in step S611 to carry the EUS resource, such that the UE 410 may use the EUS resource to send the preamble in step S612, but the disclosure is not limited thereto.

In the embodiments of the disclosure, steps S611, S612, S614 can be understood as belonging to the EUS procedure performed by the UE 410 in step S520, but the disclosure is not limited thereto.

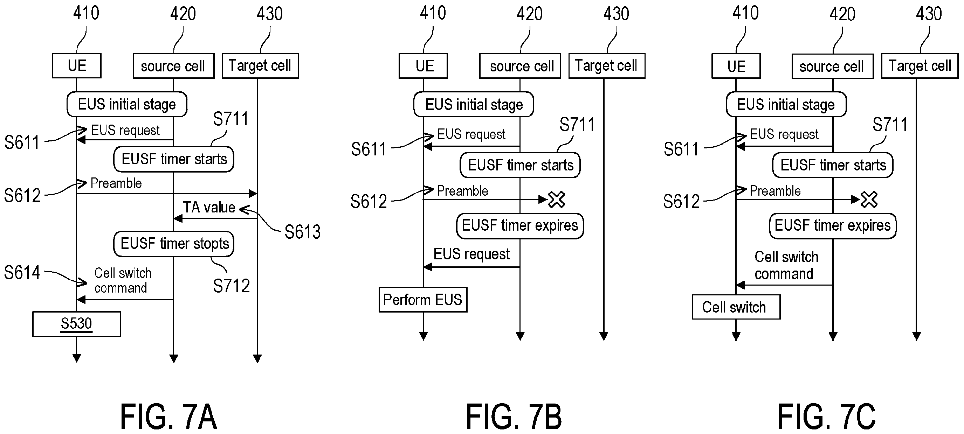

See FIG. 7A to FIG. 7C, which show different scenario of applying the EUS failure (EUSF) timer by the source cell according to embodiments of the disclosure.

In FIG. 7A, the source cell 420 may start an EUS failure (EUSF) timer in response to sending the EUS request in step S711, and stop the EUSF timer in response to receiving the TA value from the target cell 430 in step S712.

In the embodiment, if the EUSF timer does not expire before the source cell 420 receiving the TA value from the target cell 430, it may represent that the EUS procedure has been successful, and hence the source cell 420 may subsequently perform step S614 as mention in the above.

On the other hand, if the EUSF timer expires before the source cell 420 receiving the TA value from the target cell 430, it may represent that the EUS procedure has been failed. In this case, the source cell 420 may send another EUS request to the UE 410 as shown in FIG. 7B or send another cell switch command to control the UE 410 to perform a regular cell switch procedure as shown in FIG. 7C, but the disclosure is not limited thereto.

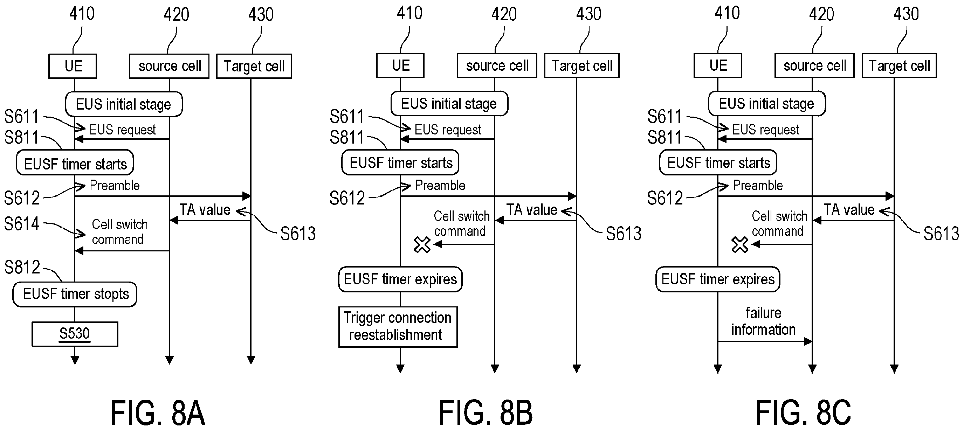

See FIG. 8A to FIG. 8C, which show different scenario of applying the EUSF timer by the UE according to embodiments of the disclosure. In FIG. 8A, the UE 410 may start an EUSF timer in response to receiving the EUS request in step S811, and stop the EUSF timer in response to receiving the cell switch command from the source cell 420 in step S812.

In the embodiment, if the EUSF timer does not expire before the UE 410 receiving the cell switch command from the source cell 420, it may represent that the EUS procedure has been successful, and hence the UE 410 may subsequently perform step S530 as mention in the above.

On the other hand, if the EUSF timer expires before the UE 410 receiving the cell switch command from the source cell 420, it may represent that the EUS procedure has been failed. In this case, the UE 410 may trigger a connection reestablishment procedure as shown in FIG. 8B or provide a failure information to the source cell 420 as shown in FIG. 8C, but the disclosure is not limited thereto.

In the embodiments of the disclosure, the EUS execution stage of the EUS procedure in FIGs. 6A to 8C can be understood as being triggered by the source cell 420. In the following embodiments, the EUS execution stage of the EUS procedure can be understood as being triggered by the UE 410, and the detailed discussions would be provided in the following.

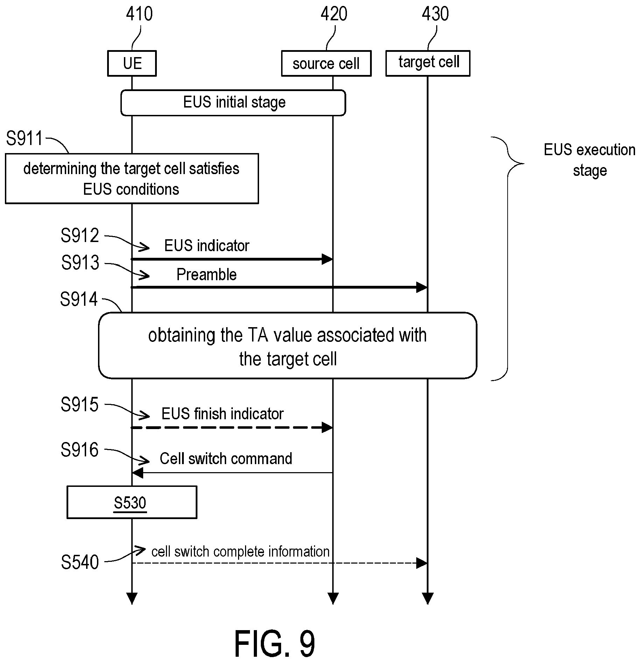

See FIG. 9, which shows a flow chart of the method for implementing a cell switch procedure according to an embodiment of the disclosure.

In FIG. 9, the UE 410 may receive the cell switch configuration in step S510 from the source cell 420 in the EUS initial stage. In this case, cell switch configuration may be carried in the CTCC message from the source cell 420, but the disclosure is not limited thereto.

After obtaining the CTCC from the CTCC message, the UE 410 may perform the associated measurement and accordingly determine whether any of the CTC satisfies an EUS condition.

In the embodiment, the EUS condition may be included in the EUS configuration, and the EUS condition may be the conditions where the UE 410 can perform the EUS procedure. For example, the UE 410 may determine if there is a CTC whose measured signal quality is better than a signal quality threshold. If yes, the UE 410 may determine that this CTC satisfies the EUS condition, but the disclosure is not limited thereto.

From another perspective, the UE 410 may determine a signal quality of each of at least one target cell. In response to determining that the signal quality of a first target cell among the at least one target cell satisfies the EUS condition, the UE 410 may determine that the first target cell is the target cell 430 satisfying the EUS condition, but the disclosure is not limited thereto.

In step S911, the UE 410 may determine that the target cell 430 satisfies the EUS condition. In step S912, the UE 410 may send an EUS indicator to the source cell 420 in response to determining that the target cell 430 satisfies the EUS condition, wherein the EUS indicator may indicate that the EUS procedure is triggered by the UE 410.

In one embodiment, the EUS indicator can be used to inform source cell that the UE 410 will perform EUS to a CTC (e.g., the target cell 430). In some embodiments, the EUS indicator may include the identifier of the target cell 430 satisfying the EUS condition.

In one embodiment, the UL resource for sending the EUS indicator may be preconfigured by the CTCs configuration. In one embodiment, the source cell 420 should not schedule the UE 410 after receiving the EUS indicator.

In step S913, the UE 410 sends a preamble (e.g., an RA preamble or SRS) to the target cell 430 satisfying the EUS condition.

In step S914, the UE 410 obtains the TA value associated with the target cell 430. In different embodiments, the UE 410 may receive the TA value from the target cell 430 or receive the TA value from the source cell 420, and the associated details would be introduced later.

In the embodiment where the UE 410 receives the TA value from the target cell 430, the UE 410 may further perform step S915 to send an EUS finish indicator to the source cell 420 after receiving the TA value from the target cell 430, wherein the EUS finish indicator indicates that the EUS procedure has finished. Therefore, in response to determining that the EUS finish indicator has been received from the UE 410, the source cell 420 may determine that the target cell 430 has provided the TA value during the EUS procedure, wherein the EUS finish indicator indicates that the EUS procedure is finished. In this case, the source cell 420 should start to schedule the UE 410 after receiving the EUS finish indicator.

In the embodiment where the UE 410 receives the TA value from the source cell 420, the UE 410 may not need to send the EUS finish indicator after obtaining the TA value, and the associated details would be introduced later.

In step S916, the UE 410 may receive a cell switch command from the source cell 420. In one embodiment, the cell switch command may not include the TA value in the embodiment where the UE 410 receives the TA value from the target cell 430 in step S914. In another embodiment where the UE 410 receives the TA value from the source cell 420 in step S914, the cell switch command may or may not include the TA value.

After step S916, steps S530, S540 can be performed, and the associated details can be referred to the embodiments in the above.

In the embodiments of the disclosure, steps S912, S913, S914 (and S915) can be understood as belonging to the EUS procedure performed by the UE 410 in step S520, but the disclosure is not limited thereto.

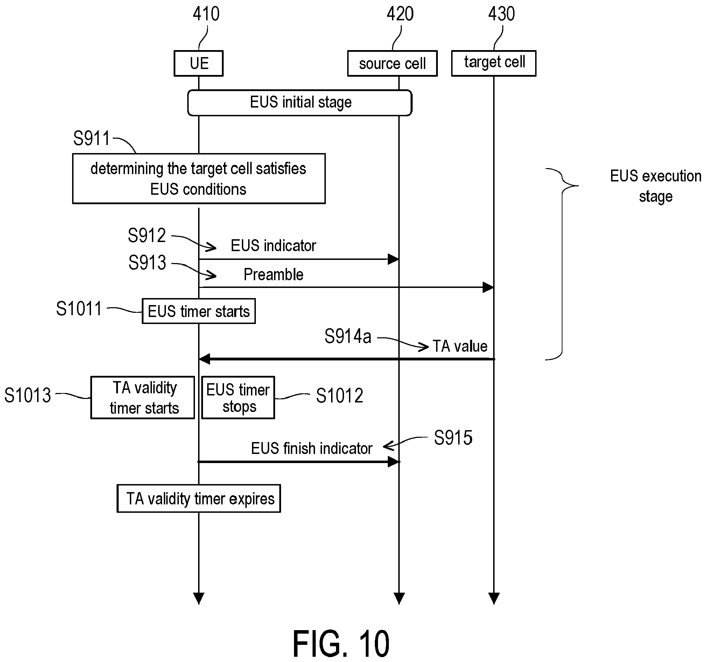

See FIG. 10, which shows a scenario of applying an EUS timer according to an embodiment of the disclosure. In the embodiment, it is assumed that the UE 410 receives the TA value directly from the target cell 430 in step S914a. In one embodiment, step S914a can be understood as a means to implement step S914, but the disclosure is not limited thereto.

In step S1011, the UE 410 may start an EUS timer in response to sending the EUS indicator to the source cell 420 in step S913, and stop the EUS timer in response to obtaining the TA value from the target cell 430 in step S1012.

In the embodiment, the EUS timer is maintained at the UE 410, and is used to detect whether the EUS procedure fails.

In one embodiment, when the EUS timer expires or stops, the UE 410 will switch back to the source cell 420 and sends the EUS finish indicator to the source cell 420.

In the embodiment, if the EUS timer does not expire before the UE 410 receiving the TA value from the target cell 430, it may represent that the EUS procedure has been successful. In this case, the UE 410 may include the information of the target cell 430 into the EUS finish indicator to assist the source cell 420 to select the target cell 430.

On the other hand, if the EUS timer expires before the UE 410 receiving the TA value from the target cell 430, it may represent that the EUS procedure has failed. In this case, the UE 410 may not include the information of the target cell 430 into the EUS finish indicator to imply that the EUS procedure has failed, but the disclosure is not limited thereto.

In one embodiment, the UE 410 may determine whether the TA value is valid before performing the cell switch procedure to the target cell 430. In response to determining that the TA value is valid, the UE 410 may perform the cell switch procedure to the target cell 430 based on the TA value.

In one embodiment, the UE 410 may start a TA validity timer in response to obtaining the TA value in step S1013 and determine whether the TA validity timer expires before performing the cell switch procedure to the target cell 430 based on the TA value.

In one embodiment, in response to determining that the TA validity timer has not expired before performing the cell switch procedure to the target cell 430 based on the TA value, the UE 410 may determine that the TA value is valid and accordingly perform the cell switch procedure to the target cell 430 based on the TA value. On the other hand, in response to determining that the TA validity timer has expired before performing the cell switch procedure to the target cell 430 based on the TA value, the UE 410 may determine that the TA value is invalid and not performing the cell switch procedure to the target cell 430 based on the TA value.

In another embodiment, the UE 410 may determine whether a signal quality variation of the target cell 430 has exceeded a threshold since the TA value is obtained. In one embodiment, in response to determining that the signal quality variation of the target cell 430 does not exceed the threshold upon obtaining the TA value, the UE 410 may determine that the TA value is valid and accordingly perform the cell switch procedure to the target cell 430 based on the TA value. On the other hand, in response to determining that the signal quality variation of the target cell 430 exceeds the threshold upon obtaining the TA value, the UE 410 may determine that the TA value is invalid and not performing the cell switch procedure to the target cell 430 based on the TA value.

In one embodiment, the TA value from the target cell 430 may be carried by RAR or a new MAC CE. After receiving the TA value, the UE 410 may perform at least one of the following actions: (1) switching back to the source cell 420; (2) sending the EUS finish indicator to the source cell 420; (3) storing the TA value; (4) stopping the EUS timer; (5) starting the TA validity timer.

In one embodiment, the UE 410 may also include the TA validity timer information in the EUS finish indicator to assist the source cell 420 to verify the TA validity of the target cell 430, but the disclosure is not limited thereto.

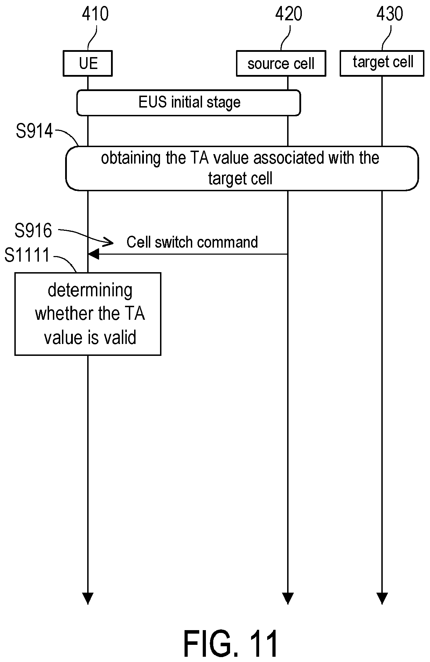

See FIG. 11, which shows a flow chart of verifying the TA value before performing the cell switch procedure according to an embodiment of the disclosure.

In FIG. 11, after performing steps S914 and S916, the UE 410 may determine whether the TA value is valid in step 51111 based on the mechanisms introduced in the above and accordingly perform or not perform the cell switch procedure, and the details may be referred to the embodiments in the above.

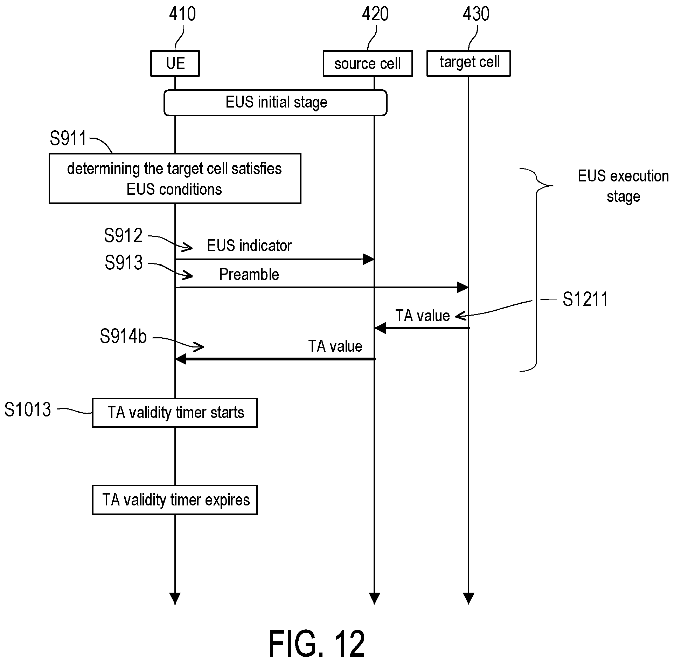

See FIG. 12, which shows a flow chart of the method for implementing a cell switch procedure according to an embodiment of the disclosure.

In FIG. 12, the UE 410 may receive the cell switch configuration in step S510 from the source cell 420 in the EUS initial stage. In this case, cell switch configuration may be carried in the CTCC message from the source cell 420, but the disclosure is not limited thereto.

After obtaining the CTCC from the CTCC message, the UE 410 may perform the associated measurement and accordingly determine whether any of the CTC satisfies an EUS condition.

Next, steps S911 to S913 can be performed, and the associated details can be referred to the embodiments in the above.

In the embodiment, it is assumed that the UE 410 receives the TA value associated with the target cell 430 from the source cell 420 in step S914b, wherein the TA value associated with the target cell 430 is provided by the target cell 430 to the source cell 420 in response to the target cell 430 has received the preamble in step S1211. In one embodiment, step S914b can be understood as a means to implement step S914, but the disclosure is not limited thereto.

In this case, after sending the preamble, the UE 410 can switch back to the source cell 420. That is, the UE 410 would not wait for the TA value from target cell after sending the preamble.

In the embodiment, the source cell 420 may use a new MAC CE to provide the TA value to the UE 410. In one embodiment, the UE 410 may store the TA value after receiving the TA value from the source cell 420.

In one embodiment, in response to determining that the TA value has been received from the target cell 430, the source cell 420 may determine that the target cell 430 has provided the TA value during the EUS procedure and provide the TA value to the UE 410 in step S914b.

In FIG. 12, the UE 410 start the TA validity timer in response to obtaining the TA value in step S1013 and determine whether the TA validity timer expires before performing the cell switch procedure to the target cell 430 based on the TA value. The associated details can be referred to the embodiments in the above.

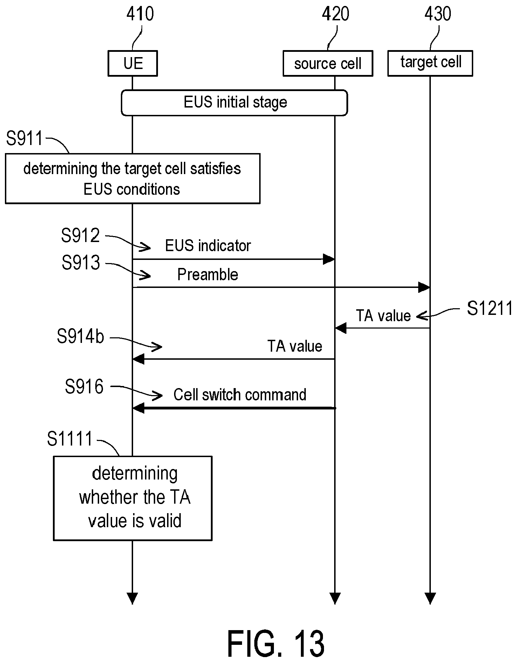

See FIG. 13, which shows a flow chart of verifying the TA value before performing the cell switch procedure according to an embodiment of the disclosure.

In FIG. 13, after performing steps S911 to S913, S914b, and S916, the UE 410 may determine whether the TA value is valid in step S1111 based on the mechanisms introduced in the above and accordingly perform or not perform the cell switch procedure, and the details may be referred to the embodiments in the above.

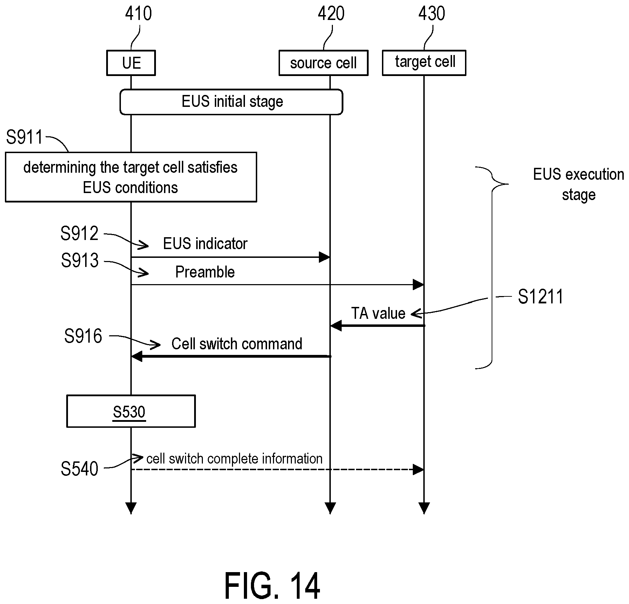

See FIG. 14, which shows a flow chart of the method for implementing a cell switch procedure according to an embodiment of the disclosure. In the embodiment, after the source cell 420 receives the TA value from the target cell 430 in step S1211, the source cell 420 may send the cell switch command to the UE 410 in step S916, wherein the cell switch command may carry the TA value associated with the target cell 430. That is, the UE 410 may obtain the TA value associated with the target cell 430 from the cell switch command.

Afterwards, the UE 410 may perform steps S530 and S540, and the associated details can be referred to the embodiments in the above.

In one embodiment, the mechanisms of the UE 410 to receive the TA value from the target cell 430 or the source cell 420 can be configured by a waiting flag maintained by the UE 410.

In one embodiment, in response to determining that the waiting flag is enabled, the UE 410 may receive the TA value from the target cell 430. In addition, in an event that the waiting flag is enabled, the UE 410 may inform the source cell 420 that the EUS procedure has finished in response to determining that the TA value has been received from the target cell 430. For example, the UE 410 may inform the source cell 420 that the EUS procedure has finished by using the EUS finish indicator mentioned in the above, but the disclosure is not limited thereto.

In another embodiment, in response to determining that the waiting flag is disabled, the UE 410 may receive the TA value from the source cell 420.

From another perspective, if the waiting flag is enabled, the UE 410 can operate based on the embodiments of FIG. 10 and FIG. 11. If the waiting flag is disabled, the UE 410 can operate based on the embodiments of FIG. 12 to FIG. 14, but the disclosure is not limited thereto.

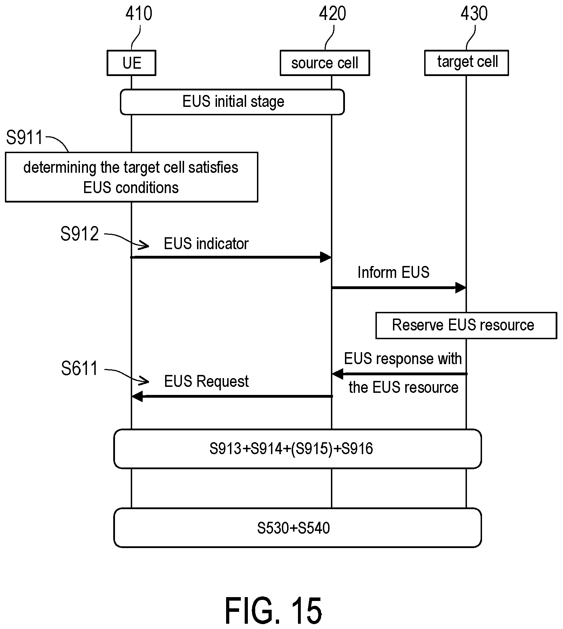

See FIG. 15, which shows a flow chart of the method for implementing a cell switch procedure according to an embodiment of the disclosure.

In the embodiment, when the source cell 420 receives the EUS indicator from the UE 410 in step S912, the source cell 420 may inform the target cell 430 that the EUS execution stage of the EUS procedure has been initiated. In this case, the target cell 430 may reserve an EUS resource as the resource configured for sending the preamble and provide an EUS response to the source cell 420, wherein the EUS response may carry the EUS resource.

Next, the source cell 420 may use the EUS request in step S611 to carry the EUS resource, such that the UE 410 may use the EUS resource to send the preamble in step S913, but the disclosure is not limited thereto. After step S913, steps S914 to S916 (wherein step S915 is optionally performed depending on whether the UE 410 receives the TA value from the target cell 430) and steps S530 and S540 can be performed. The associated details can be referred to the embodiments in the above.

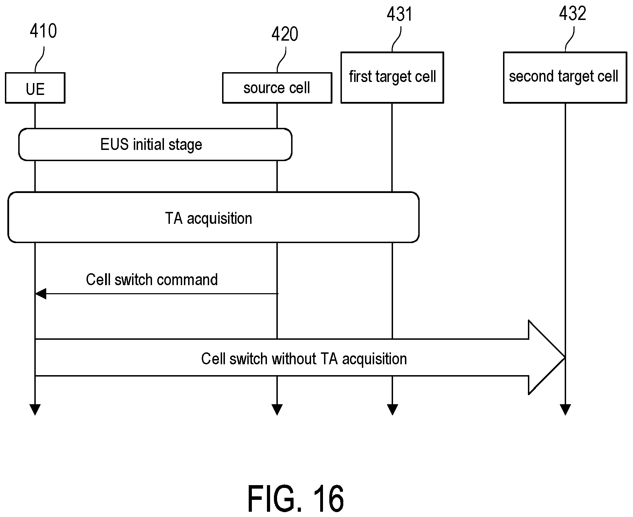

See FIG. 16, which shows a flow chart of the method for implementing a cell switch procedure according to an embodiment of the disclosure.

In the embodiment, if multiple CTCs share the same TA value, these CTCs can be regarded as belonging to the same CTCG.

In FIG. 16, it is assumed that the first target cell 431 and the second target cell 432 belong to the same CTCG, and the UE 410 obtains the TA value associated with the first target cell 431 after sending the preamble to the first target cell 431.

In the embodiment, if the cell switch command from the source cell 420 controls the UE 410 to perform the cell switch procedure to the second target cell 432, the UE 410 may perform the cell switch procedure to the second target cell 432 based on the TA value since the first target cell 431 and the second target cell 432 share the same TA value.

That is, the UE 410 does not need to additionally acquire the TA value associated with the second target cell 432, but may perform the cell switch procedure to the second target cell 432 based on the TA value associated with the first target cell 431, but the disclosure is not limited thereto.

In different embodiments, the information of CTCG can be explicitly or implicitly indicated.

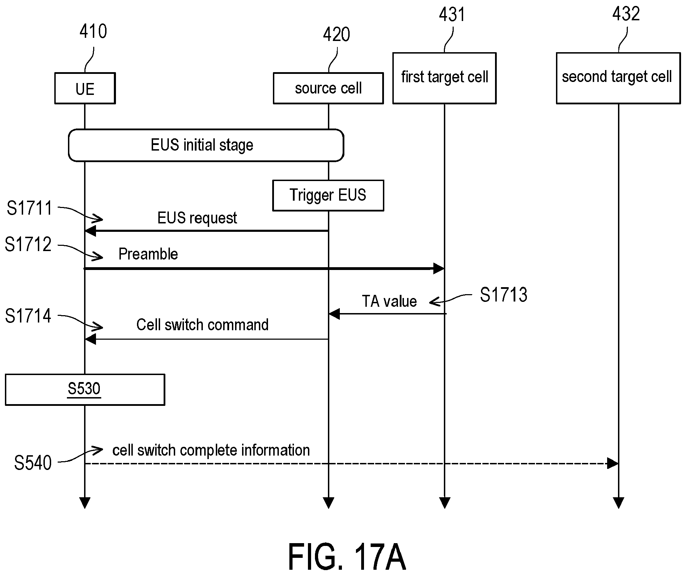

See FIG. 17A, which shows a scenario where the information of CTCG is implicitly indicated according to an embodiment of the disclosure.

In FIG. 17A, the source cell 420 may send the CTCC message to the UE 410 in the EUS initial stage, wherein the CTCC message does not include the information of CTCG. That is, the UE 410 cannot know which of the CTCs belong to the same CTCG from the CTCC message.

In the embodiment, if the source cell 420 determines that the first target cell 431 satisfies the EUS condition, the source cell 420 may send the EUS request to the UE 410 in step S1711, and the UE 410 may accordingly perform step S1712 to send the preamble to the first target cell 431.

In response to the preamble, the first target cell 431 may provide the TA value associated with the first target cell 431 to the source cell 420 in step S1713.

In the embodiment, assuming that the source cell 420 determines to request the UE 410 to perform the cell switch procedure to the second target cell 432 (which belongs to the same CTCG as the first target cell 431) for some reason after receiving the TA value in step S1713, the source cell 420 may send the cell switch command to the UE 410 in step S1714, wherein the cell switch command may request the UE 410 to perform the cell switch procedure to the second target cell 432 based on the TA value associated with the first target cell 431.

Next, the UE 410 may perform steps S530 and S540. Specifically, in step S530, the UE 410 may perform the cell switch procedure to the second target cell 432 based on the TA value associated with the first target cell 431, but the disclosure is not limited thereto.

That is, even if the UE 410 does not know the information of CTCG, the UE 410 can still implicitly know that the first target cell 431 and the second target cell 432 belong to the same CTCG since the target cell 430s indicated in the EUS request and the cell switch command are different, but the disclosure is not limited thereto.

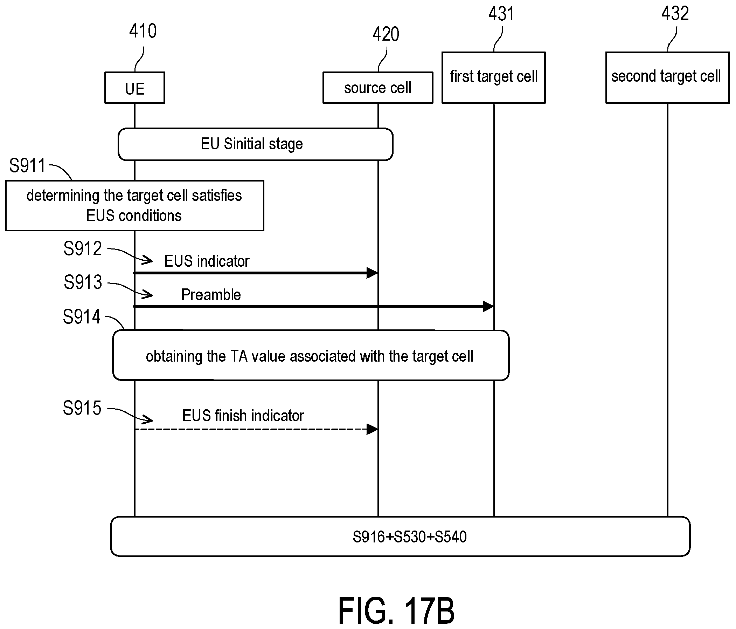

See FIG. 17B, which shows a scenario where the information of CTCG is explicitly indicated according to an embodiment of the disclosure.

In FIG. 17B, the source cell 420 may include the information of CTCG in the CTCC message sent in the EUS initial stage. For example, if the first target cell 431 and the second target cell 432 belong to the same CTCG, the source cell 420 may provide the identifier of the CTCG in the CTCC message. In this case, the UE 410 can know which of the CTCs belong to the same CTCG from the CTCC message, but the disclosure is not limited thereto.

In the embodiment, the UE 410 may send the EUS indicator to the source cell 420 in step S912 after step S911, wherein the EUS indicator may include the identifier of the first target cell 431 and/or the identifier of the CTCG where the target cell 430 belongs.

In this case, assuming that the source cell 420 determines to request the UE 410 to perform the cell switch procedure to the second target cell 432 (which belongs to the same CTCG as the first target cell 431) for some reason after receiving the EUS finish indicator in step S915 or after receiving the TA value from the first target cell 431, the source cell 420 may send the cell switch command to the UE 410 in step S916, wherein the cell switch command may request the UE 410 to perform the cell switch procedure to the second target cell 432 based on the TA value associated with the first target cell 431.

Next, the UE 410 may perform steps S530 and S540. Specifically, in step S530, the UE 410 may perform the cell switch procedure to the second target cell 432 based on the TA value associated with the first target cell 431, but the disclosure is not limited thereto.

In one embodiment, after the UE 410 receives the cell switch command in step S916, the UE 410 can further perform step S1111 of FIG. 11 to determine whether the TA value is valid, and the associated details can be referred to the embodiments in the above.

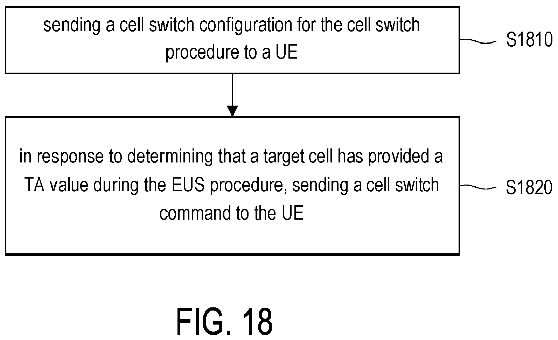

See FIG. 18, which shows a flow chart of the method for implementing a cell switch procedure according to an embodiment of the disclosure.

In step S1810, the source cell 420 sends a cell switch configuration for the cell switch procedure to a UE, wherein the cell switch configuration comprises an EUS configuration for the UE to perform an EUS procedure.

In step S1820, in response to determining that a target cell has provided a TA value during the EUS procedure, the source cell 420 sends a cell switch command to the UE, wherein the cell switch command controls the UE to perform the cell switch procedure to the target cell based on the TA value provided by the target cell in the EUS procedure.

Details of each step in FIG. 18 can be referred to the embodiments in the above, which would not be repeated herein.

In summary, the embodiments of the disclosure provide several solutions to implement the concept of early RA, which may be used to shorten the scheduling gap, such that the latency can be reduced.

## Claims

1. A method for implementing a cell switch procedure, applied to a user equipment, UE (410), **characterized in** comprising:
receiving (S510), by the UE (410), a cell switch configuration for the cell switch procedure from a source cell (420), wherein the cell switch configuration comprises an early-uplink synchronization, EUS, configuration for an EUS procedure;
performing (S520), by the UE (410), the EUS procedure based on the EUS configuration to obtain a timing advance, TA, value associated with a target cell (430) and a cell switch command from the source cell (420);
in response to receiving the cell switch command, performing (S530), by the UE (410), the cell switch procedure to the target cell (430) based on the TA value; and
transmitting (S540), by the UE (410), a cell switch complete information to the target cell (430) after completing the cell switch procedure.

2. The method according to claim 1, wherein the EUS procedure comprises:
receiving (S611) an EUS request from the source cell (420), wherein the EUS request comprises a candidate configuration index associated with the target cell (430);
sending (S612) a preamble to the target cell (430) according to a resource configured for sending the preamble;
receiving (S614) the cell switch command from the source cell (420), wherein the cell switch command carries the TA value; and
obtaining the TA value associated with the target cell (430) from the cell switch command.

3. The method according to claim 2, wherein the resource configured for sending the preamble is comprised in at least one of the EUS configuration and the EUS request.

4. The method according to claim 2, wherein the EUS procedure further comprises:
starting (S811) an EUS failure, EUSF, timer in response to receiving the EUS request;
stopping (S812) the EUSF timer in response to receiving the cell switch command from the source cell (420).

5. The method according to claim 4, further comprising:
in response to determining that the EUSF timer expires, determining that the EUS procedure has failed, and triggering a connection reestablishment procedure or providing a failure information to the source cell (420).

6. The method according to claim 1, wherein the EUS configuration comprises an EUS condition, and the EUS procedure comprises:
sending (S912) an EUS indicator to the source cell (420) in response to determining that the target cell (430) satisfies the EUS condition;
sending (S913) a preamble to the target cell (430) satisfying the EUS condition;
obtaining (S914) the TA value associated with the target cell (430); and
receiving (S916) a cell switch command from the source cell (420).

7. The method according to claim 6, further comprising:
determining a signal quality of each of at least one target cell (430); and
in response to determining that the signal quality of a first target cell among the at least one target cell satisfies the EUS condition, determining that the first target cell is the target cell satisfying the EUS condition.

8. The method according to claim 6, wherein the step of obtaining the TA value associated with the target cell (430) comprises receiving (S914a) the TA value from the target cell (430) or receiving (S914b) the TA value from the source cell (420).

9. The method according to claim 8, wherein the EUS procedure further comprises:
sending (S915) an EUS finish indicator to the source cell (420) after receiving the TA value from the target cell (430), wherein the EUS finish indicator indicates that the EUS procedure has finished.

10. The method according to claim 6, wherein the cell switch command carries the TA value, and the step of obtaining the TA value associated with the target cell (430) comprises obtaining the TA value associated with the target cell (430) from the cell switch command.

11. The method according to claim 8, wherein the UE (410) is configured with a waiting flag, and the method further comprises:
in response to determining that the waiting flag is enabled, receiving (S914a) the TA value from the target cell (430); and
in response to determining that the waiting flag is disabled, receiving (S914b) the TA value from the source cell (420).

12. The method according to claim 11, further comprising:
in an event that the waiting flag is enabled, informing the source cell (420) that the EUS procedure has finished in response to determining that the TA value has been received from the target cell (430).

13. The method according to claim 6, further comprising:
starting (S1011) an EUS timer in response to sending the EUS indicator to the source cell (420); and
stopping (S1012) the EUS timer in response to obtaining the TA value.

14. The method according to claim 13, further comprising:
in response to determining that the EUS timer expires, determining that the EUS procedure has failed and sending an EUS finish indicator to the source cell (420), wherein the EUS finish indicator indicates that the EUS procedure has finished.

15. The method according to claim 6, further comprising:
determining (S1111) whether the TA value is valid before performing the cell switch procedure to the target cell (430);
in response to determining that the TA value is valid, performing the cell switch procedure to the target cell (430) based on the TA value.

16. The method according to claim 15, further comprising:
starting (S1013) a TA validity timer in response to obtaining the TA value;
in response to determining that the TA validity timer has not expired before performing the cell switch procedure to the target cell (430) based on the TA value, determining that the TA value is valid;
in response to determining that the TA validity timer has expired before performing the cell switch procedure to the target cell (430) based on the TA value, determining that the TA value is invalid.

17. The method according to claim 16, further comprising:
determining whether a signal quality variation of the target cell (430) has exceeded a threshold since the TA value is obtained;
in response to determining that the signal quality variation of the target cell (430) does not exceed the threshold upon obtaining the TA value, determining that the TA value is valid; and
in response to determining that the signal quality variation of the target cell (430) exceeds the threshold upon obtaining the TA value, determining that the TA value is invalid.

18. The method according to claim 6, wherein the EUS indicator carries an identifier of the target cell (430) satisfying the EUS condition.

19. The method according to claim 18, comprising:
receiving (S611) an EUS request from the source cell (420), wherein the EUS request comprises a resource configured for sending the preamble; and
sending (S612) the preamble to the target cell (430) satisfying the EUS condition based on the resource.

20. The method according to claim 1, wherein the target cell (430) comprises a first target cell (431) and a second target cell (432), the first target cell (431) and the second target cell (432) share the TA value, and the method comprises:
sending a preamble to the first target cell (431); and
performing the cell switch procedure to the second target cell (432) based on the TA value.

21. The method according to claim 1, wherein the step of transmitting the cell switch complete information to the target cell (430) after completing the cell switch procedure comprises:
obtaining an uplink grant from the cell switch configuration or the cell switch command; and
transmitting the cell switch complete information to the target cell (430) after completing the cell switch procedure based on the uplink grant.

22. User equipment, UE (410), comprising:
a transceiver;
a processor, coupled to the transceiver and **characterized in** performing:
controlling the transceiver to receive (S510) a cell switch configuration for a cell switch procedure from a source cell (420), wherein the cell switch configuration comprises an early-uplink synchronization, EUS, configuration for an EUS procedure;
performing (S520) the EUS procedure based on the EUS configuration to obtain a timing advance, TA, value associated with a target cell (430) and a cell switch command from the source cell (420);
in response to receiving the cell switch command, performing (S530) the cell switch procedure to the target cell (430) based on the TA value; and
controlling the transceiver to transmit (S540) a cell switch complete information to the target cell (430) after completing the cell switch procedure.

23. A method for implementing a cell switch procedure, applied to a source cell (420), **characterized in** comprising:
sending (S1810), by the source cell (420), a cell switch configuration for the cell switch procedure to a user equipment, UE (410), wherein the cell switch configuration comprises an early-uplink synchronization, EUS, configuration for the UE (410) to perform an EUS procedure; and
in response to determining that a target cell (430) has provided a timing advance, TA, value during the EUS procedure, sending (S1820), by the source cell (420), a cell switch command to the UE (410), wherein the cell switch command controls the UE (410) to perform the cell switch procedure to the target cell (430) based on the TA value provided by the target cell (430) in the EUS procedure.

24. The method according to claim 23, comprising:
sending (S611) an EUS request to the UE (410) during the EUS procedure, wherein the EUS request comprises a candidate configuration index associated with the target cell (430);
in response to determining that the TA value has been received from the target cell (430) during the EUS procedure, determining that the target cell (430) has provided the TA value during the EUS procedure and including the TA value in the cell switch command.

25. The method according to claim 24, further comprising:
starting (S711) an EUS failure, EUSF, timer in response to sending the EUS request; and
stopping (S712) the EUSF timer in response to receiving the TA value from the target cell (430).

26. The method according to claim 25, further comprising:
in response to determining that the EUS failure timer expires, sending another EUS request to the UE (410) or sending another cell switch command to control the UE (410) to perform a regular cell switch procedure.

27. The method according to claim 23, wherein the EUS configuration comprises an EUS condition, and the method further comprises:
receiving (S912) an EUS indicator from the UE (410), wherein the EUS indicator indicates that the EUS procedure is triggered by the UE (410).

28. The method according to claim 23, further comprising:
in response to determining that an EUS finish indicator has been received from the UE (410), determining (S915) that the target cell (430) has provided the TA value during the EUS procedure, wherein the EUS finish indicator indicates that the EUS procedure is finished.

29. The method according to claim 23, further comprising:
in response to determining that the TA value has been received from the target cell (430), determining that the target cell (430) has provided the TA value during the EUS procedure and providing the TA value to the UE (410).

30. The method according to claim 29, wherein the TA value is carried in the cell switch command.

31. The method according to claim 27, wherein the EUS indicator carries an identifier of the target cell (430) satisfying the EUS condition, and the method further comprises:
acquiring a resource configured for sending a preamble from the target cell (430); and
sending (S611) an EUS request to the UE (410), wherein the EUS request comprises the resource configured for sending the preamble.

32. The method according to claim 23, wherein the target cell comprises a first target cell (431) and a second target cell (432), the first target cell (431) and the second target cell (432) share the TA value, and the method comprises:
in response to determining that the first target cell (431) has provided the TA value during the EUS procedure, determining that the target cell has provided the TA value during the EUS procedure; and
sending the cell switch command to the UE (410), wherein the cell switch command controls the UE (410) to perform the cell switch procedure to the second target cell (432) based on the TA value provided by the first target cell in the EUS procedure.

33. The method according to claim 23, further comprising:
sending an uplink grant to the UE (410), wherein the uplink grant is comprised in the cell switch configuration or the cell switch command, and the uplink grant is used for the UE (410) to transmit a cell switch complete information to the target cell (430) after completing the cell switch procedure.
